# EUROPÄISCHE PATENTSCHRIFT

(11) **EP 0 768 496 B1**
(45) Veröffentlichungstag und Bekanntmachung des Hinweises auf die Patenterteilung: **28.06.2000**
(21) Anmeldenummer: 96116004.1
(22) Anmeldetag: 06.10.1996
(51) Int. Cl.: F24D 19/00, A47B 47/02

(54) **Verteilerschrank, insbesondere für die Heizungsinstallation**
Distibutor casing, especially for a heating installation
Armoire de distribution, notamment pour installation de chauffage

(30) Priorität: 09.10.1995 DE 19537599
(43) Veröffentlichungstag der Anmeldung: 16.04.1997
(73) Patentinhaber: Straub, Hans, 99867 Gotha (DE)
(72) Erfinder: Straub, Hans, 99867 Gotha (DE)
(74) Vertreter: Fürst, Siegfried

(56) Entgegenhaltungen:
- CH-A- 442 650
- DE-U- 9 005 897
- FR-A- 1 534 796

## Beschreibung

Die Erfindung bezieht sich auf einen aus Abkantblechen bestehenden Verteilerschrank, insbesondere zur Benutzung bei der Heizungsinstallation in Gebäuden.

Derartige Schränke bestehen bislang in üblicher Weise aus zwei durch eine Rückwand verbundenen Zargen, einer fronstseitigen Tür sowie ebenfalls frontseitig im unteren Bereich angeordnetem, sog. Estrichprallblech mit dahinter im Schrankinneren liegender Umlenkschiene für die Heizungsrohre.

Dieses zumeist stufenlos höhenverstellbare Prallblech sowie die auch als Gehäusestabilisator wirkende Rohrumlenkschiene wurden bislang in der Weise mit den seitlichen Gehäusezargen lösbar verbunden, daß entsprechende Halterungen wie Laschen, für Flügelmuttern geeignete Gewindebolzen o. dgl. an die Zargen durch Schweißung angepunktet oder in diese eingepreßt werden.

Die damit verbundenen, sehr zeitaufwendigen und somit teuren, gesonderten Arbeitsgänge durch eine neue Befestigungsweise zu vermeiden, ist daher die Aufgabe der vorliegenden Erfindung.

Gelöst wird diese Aufgabe durch die im vorliegenden Patentanspruch 1 angegebenen baulichen Mittel bzw. fertigungstechnischen Maßnahmen an den Zargen und, korrespondierend dazu an Prallblech und Rohrumlenkschiene.
Die Unteransprüche beinhalten vorteilhafte Weiterbildungen des neuen Grundgedankens.

Das Wesen der neuen Bauform ist zudem in den Zeichnungen dargestellt und anhand dieser im folgenden noch näher beschrieben.
Es zeigen in weitestgehend schematischer Darstellung
- Fig. 1: einen Verteilerschrank in Vorderansicht,
- Fig. 2: desgleichen mit abgenommener frontseitiger Tür,
- Fig. 3: eine der seitlichen Zargen in Ansicht,
- Fig. 4: eine Seitenansicht zu Fig. 3 und
- Fig. 5: eine gegenüber Fig. 4 vergrößerte Darstellung der Befestigungsbereiche für Prallblech und Rohrumlenkschiene.

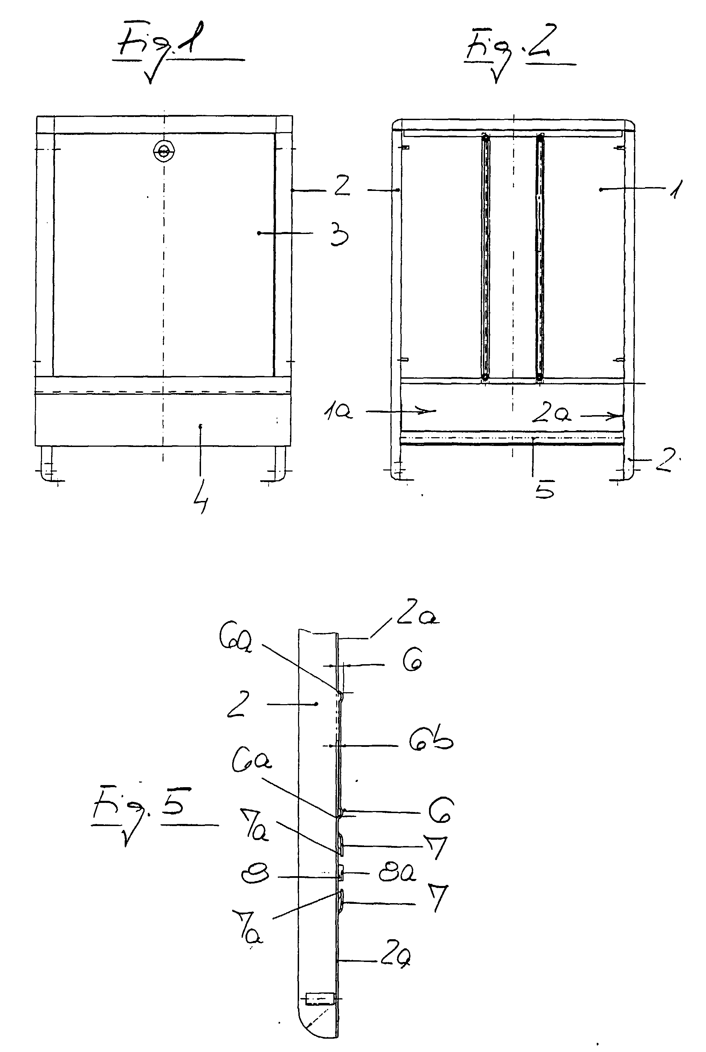

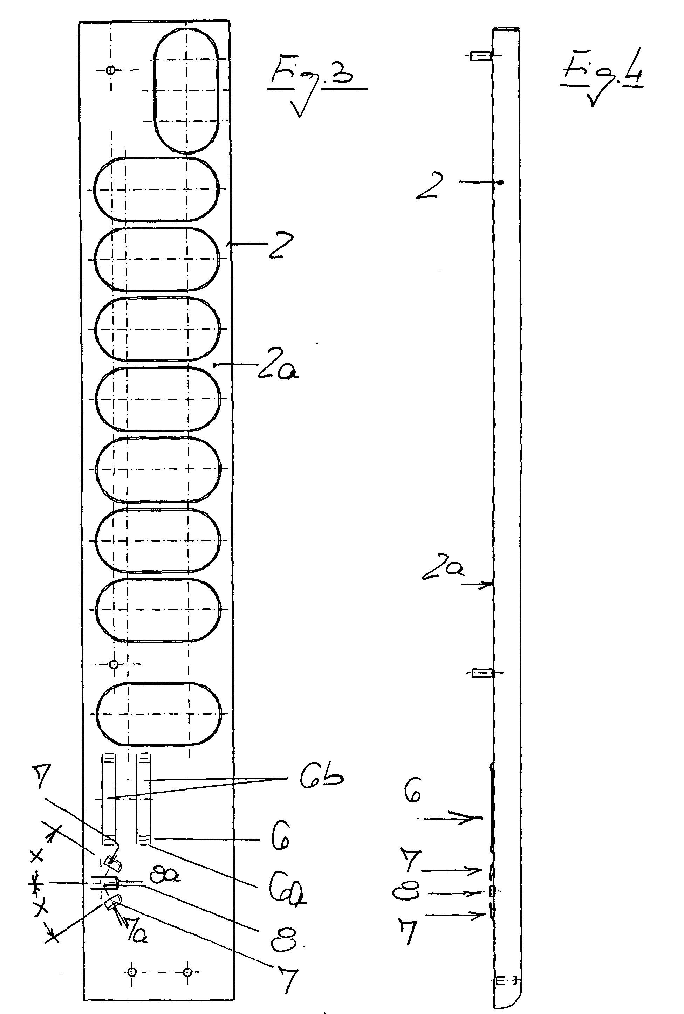

Die in Fig. 1 und 2 dargestellte, aus miteinander verbundenen Abkantblechen gebildeter Verteilerschrank, insbesondere für die Heizungsinstallation, besteht aus zwei, durch eine Rückwand 1 verbundenen Zargen 2, einer frontseitig unterhalb letzterer 3 lösbar angeordnetem Estrichprallblech 4 und dahinter im Schrankinneren la liegender, ebenfalls lösbar an den Zargen 2 angeschlossener Umlenkschiene 5. Das Neue hierbei liegt nun darin, daß als Befestigungsmittel für Prallblech 4 und Umlenkschiene 5 in das Schrankinnere la ragende Laschen 6, 7, 8 dienen, die durch eine kombinierte Stanz-/Biegeoperation in die unteren Bereiche beider Zargen 2 eingebracht sind und hinter die korrespondierende endseitige Abkantungen an Prallblech 4 und Umlenkschiene 5 greifen.

In spezieller Ausgestaltung ist es für einen festen und sicheren Anschluß dabei von Vorteil, wenn die streifenförmigen Laschen 6 für das Einstecken des Prallblechs 4 beidendig 6a ohne Materialtrennung in die Zargen 2 einlaufen und ihr Mittelbereich 6b zwecks Erzeugung einer Vorspannung zur Zargeninnenwand 2a hineingezogen ist; je nach Schrankgröße kann dabei eine paarweise parallele Anordnung mehrerer Laschen 6 je Zarge 2 erforderlich sein.

Eine weitere Ausgestaltung der Lehre dieser Erfindung liegt noch darin, daß die Laschen 7 und 8 für die Rohrumlenkschiene 5 unterhalb derer 6 für das Prallblech 4 liegen, einendig 7a, 8a freigeschnitten und entsprechend der Querschnittsprofilierung der Rohrumlenkschiene 5 auf einer Bogenbahn oder im Winkel x zueinander angeordnet sind bei gleicher oder unterschiedlicher Formgebung entsprechend der Ausbildung des Stabilisators 5. Für die Fertigung der Zargen 2 samt ihrer Anschlußmittel ist somit nur ein einziger Arbeitsgang erforderlich; die eingangs gestellte Aufgabe ist somit in einfacher Weise optimal gelöst.

Zur Gewährleistung eines festen Sitzes der auch als Stabilisator des Gesamtgehäuses 1, 2, 3 dienenden Rohrumlenkschiene 5 ist es zudem noch von Vorteil, wenn mindestens eine der Befestigungslaschen 7, 8, vorzugsweise dabei die mittlere 8, 8a als federnde Zunge ausgebildet ist.

### Bezugszeichenliste

- 1: Verteilerschrankrückwand
- 1a: Schrankinneres
- 2: Zarge
- 2a: Zargeninnenwand
- 3: Fronttür
- 4: Estrich-Prallblech
- 5: Rohrumlenkschiene, Stabilisator
- 6: Lasche für Prallblech 4
- 6a: Material übergang
- 6b: eingezogener Mittelbereich
- 7: Lasche für Rohrumlenkschiene
- 7a: freies Ende (Freischnitt)
- 8: Lasche für Rohrumlenkschiene, federnde Zunge
- 8a: freies Ende (Freischnitt)

- x: Winkellage der Laschen zueinander

## Patentansprüche

1. Aus miteinander verbundenen Abkantblechen gebildeter Verteilerschrank, insbesondere für die Heizungsinstallation, bestehend aus zwei durch eine Rückwand (1) verbundenen Zargen (2), einer front- seitigen Tür (3) sowie ebenfalls frontseitig unterhalb letzterer (3) lösbar angeordnetem Estrichprallblech (4) mit dahinter im Schrankinneren (1a) liegender, ebenfalls lösbar an den Zargen (2) angeschlossener Umlenkschiene (5) für die Heizungsrohre, wobei
als Befestigungsmittel für Prallblech (4) und Umlenkschiene (5) in das Schrankinnere (1a) ragende Laschen (6, 7, 8) dienen, die durch eine kombinierte Stanz-/Biegeoperation in die unteren Bereiche beider Zargen (2) eingebracht sind und hinter die korespondierende endseitige Abkantungen an Prallblech (4) und Umlenkschiene (5) greifen.

2. Verteilerschrank nach Anspruch 1,
**dadurch gekennzeichnet**,
daß die streifenförmigen Laschen (6) für das Einstecken des Prallblechs (4) beidendig (6a) ohne Materialtrennung in die Zargen (2) einlaufen und ihr Mittelbereich (6b) zwecks Erzeugung einer Vorspannung zur Zargeninnenwand (2a) hin eingezogen ist.

3. Verteilerschrank nach Anspruch 2,
**gekennzeichnet durch**
paarweise parallele Anordnung mehrerer Laschen (6) je Zarge (2).

4. Verteilerschrank nach mindestens einem der vorhergehenden Ansprüche,
**dadurch gekennzeichnet,**
daß die Laschen (7 und 8) für die Rohrumlenkschiene (5) unterhalb derer (6) für das Prallblech (4) liegen, einendig (7a,. 8a) freigeschnitten und entsprechend der Querschnittsprofilierung der Rohrumlenkschiene (5) auf einer Bogenbahn oder im Winkel (x) zueinander angeordnet sind.

5. Verteilerschrank nach Anspruch 4,
**gekennzeichnet durch**
unterschiedlich große Formgebung der Laschen (7 und 8) für die Umlenkschiene (5).

## Claims

1. Distributor cabinet, especially for the heating installation, which is formed from folded-edge sheet metal plates connected together and which consists of two panels (2) connected by rear wall (1), a frontal door (3) as well as a similarly frontal floor baffle plate (4), which is detachably arranged below the latter (3), with a deflection rail (5), which is disposed therebehind in the cabinet interior (1a) and similarly detachably connected with the panels (2), for the heating pipes, wherein straps (6, 7, 8) projecting into the cabinet interior (1a) serve as fastening means for the baffle plate (4) and deflection rail (5), which straps are placed in the lower regions of the two panels (2) by a combined punching and bending operation and engage behind the corresponding end folded edges at the baffle plate (4) and deflection rail (5).

2. Distributor cabinet according to claim 1, characterised in that the strip-shaped straps (6) for the insertion of the baffle plate (4) run at both ends into the panels (2) without material separation and their middle region (6b) is for the purpose of generation of a bias drawn in relative to the panel inner wall (2a).

3. Distributor cabinet according to claim 2, characterised by a paired parallel arrangement of several straps (6) for each panel (2).

4. Distributor cabinet according to at least one of the preceding claims, characterised in that the straps (7 and 8) for the pipe deflection rail (5) lie below those (6) for the baffle plate (4), are cut free at one end (7a, 8a) and are arranged in correspondence with the cross-sectional profiling of the pipe deflection rail (5) on a curved path or at an angle (x) to one another.

5. Distributor cabinet according to claim 4, characterised by differently sized shaping of the straps (7 and 8) for the deflection rail (5).

## Revendications

1. Armoire de distribution, notamment pour installation de chauffage, formée de tôles repliées raccordées entre elles, et composée de deux châssis (2) reliés par une paroi dorsale (1), d'une porte frontale (3) ainsi que d'une tôle de protection (4), disposée également frontalement sous cette dernière (3) de manière amovible et munie à l'arrière d'un rail de déviation (5) pour les tuyaux de chauffage, située à l'intérieur de l'armoire (1a), et également raccordée de façon amovible aux châssis (2), sachant que des languettes (6, 7, 8) saillantes à l'intérieur de l'armoire (1a) servent de moyens de fixation de la tôle (4) et du rail de déviation (5), languettes qui sont réalisées dans les parties inférieures des deux châssis (2) par une opération combinée d'estampage et de cintrage, et qui ont prise sur la tôle (4) et le rail de déviation (5) derrière les bords correspondants des extrémités.

2. Armoire de distribution selon la revendication 1, **caractérisée en ce que** les languettes (6) en forme de bande passent dans les châssis (2) aux deux extrémités (6a) sans séparation de matériel pour insérer la tôle (4) et que leur partie médiane (6b) est rentrée en direction de la paroi intérieure du châssis (2a) dans le but de créer une tension.

3. Armoire de distribution selon la revendication 2, **caractérisée par** une disposition parallèle par paires de plusieurs languettes (6) pour chaque châssis (2).

4. Armoire de distribution selon au moins l'une des revendications précédentes, **caractérisée en ce que** les languettes (7 et 8) pour le rail de déviation des tuyaux (5) sont situées en-dessous de celles de la tôle (4), coupées à une extrémité (7a, 8a) et qu'elles sont placées l'une vers l'autre de façon correspondante au profil de la coupe du rail de déviation des tuyaux (5) sur une voie en arc ou en angle (x).

5. Armoire de distribution selon la revendication 4, **caractérisée par** une conception des languettes (7 et 8) de différentes tailles pour le rail de déviation (5).
